**Europäisches Patentamt**

**European Patent Office**

**Office européen des brevets**

(19)

(11) **EP 1 132 834 A1**

(12) # EUROPEAN PATENT APPLICATION

(43) Date of publication:
**12.09.2001 Bulletin 2001/37**

(51) Int Cl.$^7$: **G06F 17/30**

(21) Application number: **01200870.2**

(22) Date of filing: **08.03.2001**

| | |
|---|---|
| (84) Designated Contracting States:<br>**AT BE CH CY DE DK ES FI FR GB GR IE IT LI LU**<br>**MC NL PT SE TR**<br>Designated Extension States:<br>**AL LT LV MK RO SI**<br><br>(30) Priority: **08.03.2000 NL 1014584**<br><br>(71) Applicant: **Telematica Instituut**<br>**7500 AN Enschede (NL)**<br><br>(72) Inventors:<br>• **Eijkel, van den, Gerard Cornelis**<br>**NL-7582 BN Losser (NL)** | • **Velthausz, Daan Diederik**<br>**NL-7007 HL Dietinchem (NL)**<br>• **Porskamp, Paulus Antonius Philippus**<br>**7131 SZ Lichtenvoorde (NL)**<br><br>(74) Representative: **Land, Addick Adrianus Gosling**<br>**Arnold & Siedsma,**<br>**Advocaten en Octrooigemachtigden,**<br>**Sweelinckplein 1**<br>**2517 GK Den Haag (NL)** |

(54) **Method and device for retrieving video information**

(57) The present invention relates to a method for processing and/or retrieving video information, wherein in accordance with a predetermined criterion, i.e. one or more algorithms, a video signal is sub-divided into a number of hierarchical levels and stored, and wherein the video information can be presented to the user at the different levels with the option of switching between the levels and forward winding/rewinding thereof.

FIG. 1

**EP 1 132 834 A1**

## Description

The retrieval of video information usually takes place using attributes such as title, genre, actors and the like. In order to obtain good semantic characteristics, human interpretation is usually still relied on in practice. Apart from being labour-intensive, such an interpretation is often also subjective.

The present invention provides a method for processing and/or retrieving video information, wherein in accordance with a predetermined criterion, i.e. one or more algorithms, a video signal is sub-divided into a number of hierarchical levels and stored, and wherein the video information can be presented to the user at the different levels with the option of switching between the levels and forward winding/rewinding thereof.

Use is preferably made of spatial image entropy, which has been found in practice to be a good criterion for both colour images and black and white images.

The entropy signal can be used to detect scenes, whereby the video signal is sub-divided into scenes with a key image for each scene. In similar manner the scenes can be sub-divided into shot segments, which can each be provided with a key image.

Finally, the entropy signal can be used for clip detection, wherein the video signal is sub-divided into clip segments with a key image.

The present invention further provides a device for performing the method, with which the user can analyse the video signal in intuitive manner.

Further advantages, features and details of the present invention will be elucidated on the basis of the following description with reference to the annexed figures, in which:

> fig. 1 shows a graph in which the entropy is plotted against an advancing number of images;
> fig. 2 shows another example of a graph, wherein the normalized entropy is plotted relative to a number of images;
> fig. 3 shows a diagram elucidating the different levels in a video; and
> fig. 4 shows an example of a screen on which the results of the method can be presented.

In the preferred embodiment of the method according to the present invention the entropy criterion is extracted from each of the images in a video sequence, which results in the entropy signal. The entropy signal is then analysed. For analysis of the entropy signal for scene detection this analysis results in a division of the video into scene segments, which each have a beginning and an end and which are represented by a single key image.

In the case of shot detection the video is divided on the basis of a hierarchical clustering, which each have a beginning and end and a single key image.

In the case of clip detection the video is divided into clip segments with beginning and end and a key image.

The entropy criterion H is calculated on a normalized grey level image and can be interpreted as a regular information measure of the spacial intensity distribution. If $I_k$ (x,y) represents an intensity of a pixel (x,y) (in an image $K_4$ of NxM pixels), the following then applies for the entropy:

$$p_k(x, y) = \frac{I(x, y)}{\sum_x \sum_y I(x, y)}$$

$$H_k = \sum_x \sum_y p(x, y) \log_2 p(x, y)$$

The image entropy can be normalized between 0 and 1 by division by $\log_2$ (NM). This criterion is not very complex and works for both colour images and grey images.

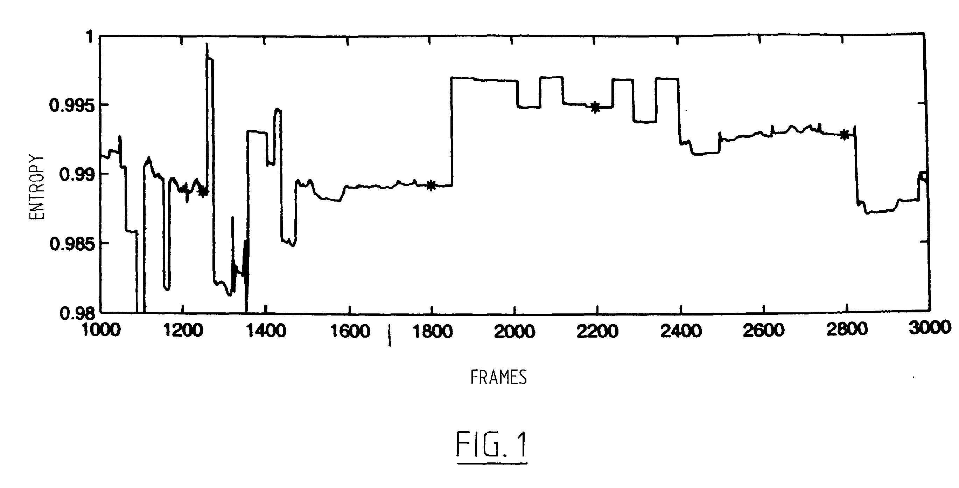

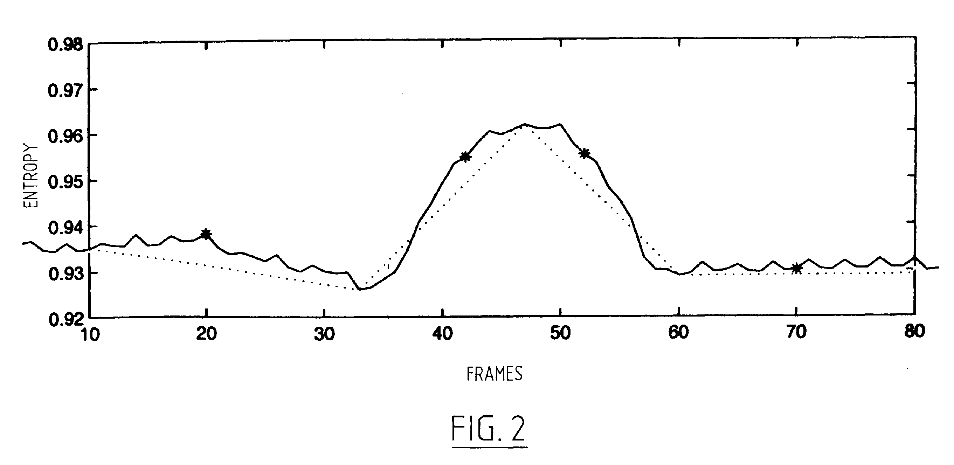

Fig. 1 shows the entropy criterion for a sequence of images, the so-called entropy signal. Abrupt changes of shot and scene are clearly recognizable as discontinuity in the entropy signal. Various partly linear signals can further be identified. The horizontal segments represent practically static images, while inclines represent slowly changing shots, for instance due to object and/or camera movement. A combination of inclines forms a pattern which for instance indicates a gradual change of scene, such as for instance becomes clear in figure 2.

In fig. 1 can also be identified spikes which can be attributed to changes in the subtitling, for instance around image 2600. The difference can also be clearly seen between video segments in which many changes take place and much less dynamic segments. All this information from the entropy signal can be extracted and used for segmentation.

In order to analyse the entropy signal the signal is regarded as a collection of partially linear segments. Each of these linear pieces form a shot and are represented by a single image. A collection of shots, which is bounded by discontinuities on the left and right-hand side of the entropy signal, form a scene. Finally, clips are formed from groups of scenes with similar dynamic properties. So-called key images are used to represent a segment, such as clips, scenes and shots. A key image reproduces a single segment and is chosen on the basis of the entropy. A key image is the image with an entropy value which is close to the average entropy of the segment.

Scenes are found by making use of a locally adjustable threshold on the difference in entropy from image to image. The threshold is based on the local variance of the entropy. The variance v and the image-to-image difference d for image number I are calculated as follows, with the entropy signal H as given:

$$s(i) = \frac{1}{\sqrt{2}} \sqrt{\mathrm{var}(\{H_{i-n},..., H_{i-1}\} + \mathrm{var}(\{H_{i+1}....H_{i+n}\})}$$

$$d(i)=\left|H_{i+1}-H_i\right|$$

The standard deviation is calculated as average for the left and right-hand side. At the scene change the variance on the left and right-hand side will be extremely small. The scene changes are the images which form the collection S, for which applies:

$$S = \{i \mid d(i) > Th^*s(i)\}$$

It has been found that a value for n equal to the frame speed and for Th=5 are a good combination for a wide range of sequences. A scene then consists of the image sequence which lies between two successive scene change images.

Shots are found by making use of a specific type of partially linear approximation (PLA) on the running average of the entropy signal of a scene. Each linear part represents a shot and is represented by a single key image. For the running average an averaging window which equals half the image speed is sufficient to lower the noisy information, such as quantization noise and subtitles. Each linear part is a sequence of images which form a shot. It has been found that the approximation of 5% of the RMS (Route Mean Square) error results in sufficient but not too detailed shot representations of a scene.

Clips are found by clustering the representative scene images on the basis of the scene change sequence. There are two criteria which are used for each representative image: the absolute frame number and the difference from the closest representative frame number. The automatic estimate consists of two steps: firstly, the PLA of a few minutes of a whole sequence is approximated, using a 5%. RMS error. The PLA results in a vector of image numbers and a corresponding vector of entropy values. The vector of image numbers is directly proportional to the scene change frequency, whereby the second step entails a different PLA, which is applied to the vector of image numbers which are obtained from the first PLA. It has been found that the resulting collection of linear pieces is a good estimate for the actual number of clusters. After the clustering a further-processing operation is carried out so as to ensure that the clusters have a length of at least one second. Various dynamic clips are formed in this manner.

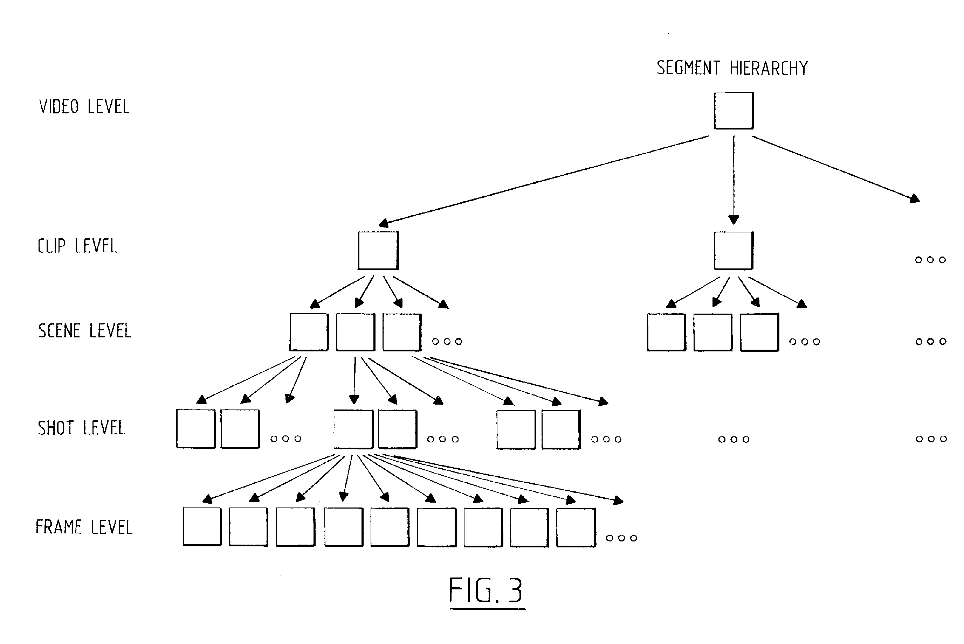

Fig. 3 designates five possible hierarchical levels which can be obtained on the basis of the described segmentation algorithm.

The top level is the video in a single segment which, just as other segments, is represented by a single key image. The second level is the clip level, the third level is formed by the scene segments and the fourth level is formed by all shot segments, while the lowest and fifth level is formed by all images in the video. This tree structure is simultaneously a zoom-in mechanism, whereby a more detailed view of a segment in the video is obtained at each deeper level. The time sequence in the video is retained at each level.

The described data structure can be used for browsing a video storage. For static browsing a collection of videos is shown to the user at the video level. One key image for each video is herein shown in a square, the dimension of which depends on the number of key images which has to be contained therein. A user selects the most suitable key image, for instance using a mouse click, whereafter the subsequent detail level is shown, i.e. the key images of the clips in the video. The user can then make the choice to scene level and thus further to image level via shot level.

During dynamic browsing the segments are represented not by a single key image but by a short video film which plays on the key image window. The user can play, repeat or stop each of the segmented films. It is possible for the user to obtain rapid playback by playing, at a determined level in the hierarchy, the key images of the segments at the subsequent level as a sequence, at a speed desired by the user. In order to obtain a smooth image, it is possible to display a collection of images around the key image in the sequence. It is also possible to add audio to the images, while finally it is possible to play the whole segment for the user.

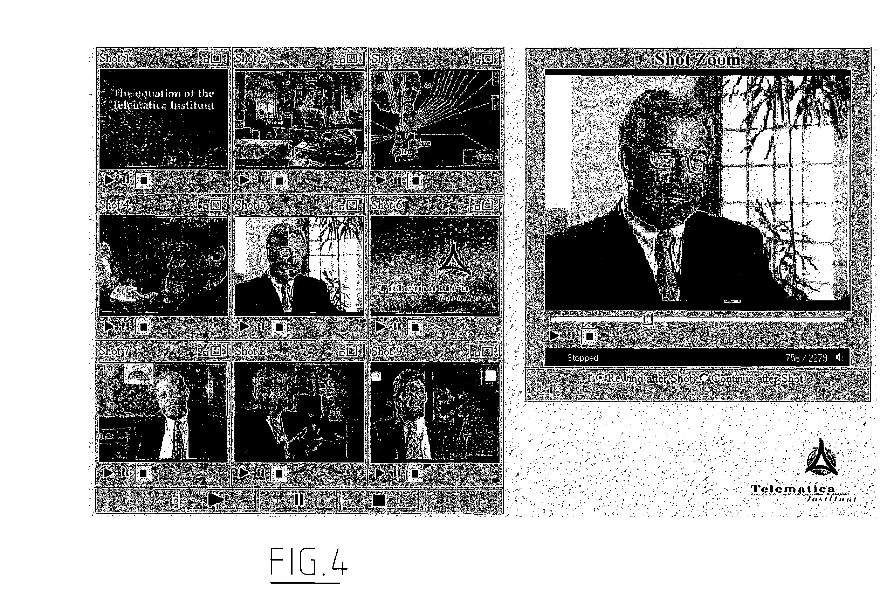

Fig. 4 shows an example of the so-called smooth play option' at shot level on a screen.

On the left-hand side of figure 4 there are situated 9 viewing windows for reproducing video fragments or images thereof. On the right-hand side of figure 4, there is shown 1 window for reproducing an image or a video segment, such as a frame, a shot, a scene, a clip or a video in a larger format. An aspect of this embodiment is that it is possible to group the images of the individual windows by means of selection thereof. Processes can be performed on a group of selected windows. It is for instance possible to select shot 1, 2 and 8 and play all three simultaneously by means of one click. It is further possible for instance to simultaneously copy these three images to a new location using one operation. Other processes can also be performed on such a group in similar manner.

In the method and device according to the present invention the raw video data can be stored locally on a server or a number of servers in a database in a number of distributed databases and the like. The results of the video segmentation are described using XML (eXtended Markup Language) and is based on the proposals for video structure descriptions as according to MPEG7. In the XML file the whole structure of a video is described, from video level to image level. Different XML files can be used for different abstraction levels (key images, smooth video, smooth audio and full video). Different types of storyboard and types of visualization are designed and described in XSL (eXtended Stylesheet Language).

The above stated principles can be brought together in web pages using HTML and JavaScript.

It is possible to perform the methods and the algorithms on a personal computer, for instance provided with a Pentium III 500 Mhz with 256 MB internal RAM. There must be 5 GB available for storage of a video. A network with a bandwidth of 50 MB per second is necessary to send the video segments to the client.

According to the present invention only small descriptions (XML files) are necessary for different levels, irrespective of the video and layout. It is also possible to design new lay-outs by means of XSL files without changing the video or structure descriptions, and to even re-use layouts for other video and structure descriptions.

The present invention can also be applied in an open distributed architecture which is based on the web. This architecture uses components which take the place of a part of the algorithm. The video analysis is then one of the components of the architecture. Different segments can be obtained from different analysis services at different locations on the web.

The present invention is not limited to the above described preferred embodiment thereof; the rights sought are defined by the following claims, within the scope of which many modifications can be envisaged.

## Claims

1. Method for processing and/or retrieving video information, wherein in accordance with a predetermined criterion, i.e. one or more algorithms, a video signal is sub-divided into a number of hierarchical levels and stored, and wherein the video information can be presented to the user at the different levels with the option of switching between the levels and forward winding/rewinding thereof.

2. Method as claimed in claim 1, wherein the criterion of spatial image entropy is according to the formula:

$$p_k(x, y) = \frac{I(x, y)}{\sum_x \sum_y I(x, y)}$$

$$H_k = \sum_x \sum_y p(x, y) \log_2 p(x, y)$$

wherein $I_k(x, y)$ represents the intensity of a pixel at (x,y) in image k of NxM pixels.

3. Method as claimed in claim 2, wherein the image entropy is normalized between 0 and 1 divided by $\log_2(NM)$.

4. Method as claimed in claim 1, 2 or 3, wherein a scene is formed by a collection of shots which are bounded by discontinuities in the entropy signal.

5. Method as claimed in claim 2, 3 or 4, wherein scenes are found using a locally adjustable threshold on the difference in entropy between images.

6. Device for processing and/or retrieving video information, provided with a processor, internal memory and a screen, wherein a number of windows are made visible on the screen for showing thereon key images of video segments such as clips, scenes, shots and or individual images.

7. Device as claimed in claim 6, wherein for the images on the windows the playback speed, starting/stopping or rewinding can be activated by the user, for instance by means of a mouse click.

8. Device as claimed in claim 6 or 7, wherein a plurality of images are selected for performing operations thereon including reproducing and/or copying.

9. Device as claimed in claim 8, wherein audio and video can be controlled separately.

10. Method for processing or retrieving information, wherein two or more images are first selected and the operations are then performed.

FRAMES

FIG. 1

EP 1 132 834 A1

FIG. 2

FIG.3

FIG.4

**European Patent Office**

## EUROPEAN SEARCH REPORT

Application Number

EP 01 20 0870

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 938 054 A (SIEMENS CORP RES INC) 25 August 1999 (1999-08-25) * column 14, line 26 - column 15, line 10 * * column 17, line 4 - column 19, line 6; figures 12,14,15 * | 1,6-8,10 | G06F17/30 |
| X | WO 98 34181 A (KONINKL PHILIPS ELECTRONICS NV ;PHILIPS NORDEN AB (SE)) 6 August 1998 (1998-08-06) * page 4, line 26 - page 7, line 25; figures * | 1,6,7 | |
| A | NAGASAKA A ET AL: "AUTOMATIC VIDEO INDEXING AND FULL-VIDEO SEARCH FOR OBJECT APPEARANCES" IFIP TRANSACTIONS A. COMPUTER SCIENCE AND TECHNOLOGY,XX,XX, vol. A7, 1992, pages 113-127, XP000515606 * page 113, line 1 - page 121, line 2 * | 1-7 | |
| X | ANONYMOUS: "Visual for Multiple-Icon Drag Movement" IBM TECHNICAL DISCLOSURE BULLETIN, vol. 37, no. 9, 1 September 1994 (1994-09-01), pages 417-418, XP000473460 New York, US | 10 | **TECHNICAL FIELDS SEARCHED (Int.Cl.7)** G06F |
| A | * the whole document * | 8 | |

The present search report has been drawn up for all claims

| Place of search | Date of completion of the search | Examiner |
|---|---|---|
| THE HAGUE | 17 July 2001 | FOURNIER, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 01 20 0870

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2001

| Patent document cited in search report | | Publication date | Patent family member(s) | | Publication date |
|---|---|---|---|---|---|
| EP 0938054 | A | 25-08-1999 | NONE | | |
| WO 9834181 | A | 06-08-1998 | EP | 0928455 A | 14-07-1999 |
| | | | JP | 2000511736 T | 05-09-2000 |